# EUROPEAN PATENT APPLICATION

(11) **EP 1 014 693 A2**
(43) Date of publication of application: **28.06.2000**
(21) Application number: 99117646.2
(22) Date of filing: 07.09.1999
(51) Int. Cl.: H04N 1/48

(54) **Color separation for image scanning with more than three colors**

(30) Priority: 23.12.1998 US 219951
(71) Applicant: Hewlett-Packard Company, Palo Alto, CA 94303 (US)
(72) Inventor: Steinle, Michael J., Fort Collins, CO 80525 (US)
(74) Representative: Schoppe, Fritz, Dipl.-Ing.

(57) **Abstract**

A color separator for an image scanner provides more than three colors. Three example embodiments are provided. Each embodiment incorporates a trichromatic dichroic beamsplitter (100), and a polarization filter (110). By inserting polarization coatings into the optical path, each spectral band from the dichroic coated optics is further divided into multiple spectra (figures 2A, 2B, 2C), thereby providing better color information. The polarization filter may be mechanically moved to insert one of two polarization areas into a light path (figure 1), or different rows of a photosensor array may be filtered by different polarization filters (figure 3), or an electronically controllable polarization filter may be used. In one embodiment, additional conventional color absorption filters are also inserted into the light path (figure 4). The spectral response of the dichroic layers in the beamsplitter is different than the spectral response of the color absorption filters.

## Description

### FIELD OF INVENTION

This invention relates generally to color image scanning devices such as copiers and digital scanners for computers, and more specifically to color separators and color filtering within scanners.

### BACKGROUND OF THE INVENTION

Image scanners convert a visible image on a document or photograph, or an image in a transparent medium, into an electronic form suitable for copying, storing or processing by a computer. An image scanner may be a separate device or an image scanner may be a part of a copier, part of a facsimile machine, or part of a multipurpose device. Reflective image scanners typically have a controlled source of light, and light is reflected off the surface of a document, through an optics system, and onto an array of photosensitive devices. The photosensitive devices convert received light intensity into an electronic signal. Transparency image scanners transmit light through a transparent image, for example a photographic positive slide, through an optics system, and then onto an array of photosensitive devices.

In a typical image scanner, light from an image is focused onto linear arrays of photosensors for scanning one line at a time. A two dimensional image is scanned by providing relative movement between the linear sensor arrays and the original image. For gray-scale scanning there may be only a single linear array of photosensors. In general, a color scanner measures the intensity of at least three relatively narrow bands of wavelengths of visible light, for example, bands of red, green and blue. A color scanner may sequentially present multiple bands of wavelengths to a single row of sensor elements by sequentially moving color filters into the light path or by sequentially activating different colored light sources. For higher speed, a color scanner may simultaneously present multiple bands of wavelengths to multiple rows of sensor elements. For additional general background, see for example, K. Douglas Gennetten and Michael J. Steinle, "Designing a Scanner with Color Vision," *Hewlett-Packard Journal*, August, 1993, pp 52-58.

In some configurations, a color filter is fabricated directly onto each row of photosensitive elements. For a configuration using row filters, for any one line on the document being scanned, intensity of one color is measured, then at a later time intensity of a second color is measured, and then at a later time intensity of a third color is measured. Therefore, memory is required to buffer intensity measurements for a line on the scanned image until the final measurements are completed for that line. In other configurations, a color-separator/beamsplitter is used to simultaneously present all colors from one line on the document being scanned onto multiple rows of photosensitive elements. For a configuration using a color separator, for any one line on the document being scanned, intensity measurements for all colors are made simultaneously, thereby eliminating the requirement for buffer memory for multiple scans of a single line.

The human eye comprises three different kinds of color receptors (cones) that are sensitive to various spectral bands or regions that roughly correspond to red, green, and blue light. The receptors are relatively "broad band" devices, sensitive to a wide range of wavelengths within each color band region. For example, blue receptors are typically sensitive to light having wavelengths ranging from about 400 nm to 500 nm; green receptors to light having wavelengths ranging from about 480 nm to 600 nm; and red receptors to light having wavelengths from about 500 nm to 650 nm. While the specific sensitivities of the color receptors vary from person to person, the average response for each receptor has been quantified and is known as the "CIE standard observer."

The ability to accurately reproduce colors, on a psychophysical basis, in a tristimulus system requires a fairly close spectral band match between the stimuli (display colors or printed colors) and the receptors (human visual system). Therefore, accurate color reproduction may be achieved by ensuring that the color measurement devices have spectral bands or ranges that match as closely as possible the spectral response ranges of the three types of receptors in the human eye. Since the receptors of the human eye are sensitive to a relatively broad spectral range, for accurate color reproduction, the filters or illumination sources in color scanners should have similar broad spectral ranges. Unfortunately, it is difficult to fabricate filters having broad band spectral ranges that can closely approximate the response of the human eye. In addition, the standard observer model has a blue response that is negative for some wavelengths. A negative response is not possible with a real filter, but a separate blue filter may be used to measure the appropriate bandwidths and the measured intensity may be subtracted from other blue intensity measurements.

Color measurement values with three non-ideal filter spectral bands can be linearly transformed, using a three by three matrix, into measurement values that approximate what is needed for the human visual system. In general, measurement with three non-ideal filters will result in transformed values that have some inaccuracy. In general, measuring the light over more than three spectral bands may enable a more accurate estimate of the light at each wavelength. For example, for two-dimensional photosensor arrays for cameras, sensors may be arranged in clusters of four, each sensor receiving light in one of four bands of wavelengths. See, for example, U.S. Patent Number 4,245,241 (Sato *et al*.). In Sato *et al*., the four colors bands are red, yellow, cyan, and blue. U.S. Patent Number 5,753,906 (Gennetten), which is incorporated herein for all that it discloses, provides a scanner having more than three colors by using more than three colors of light sources. U. S. Patent Number 5,479,524 (Ferrell *et al*.), which is incorporated herein for all that it discloses, provides a scanner having more than three colors by inserting an additional color filter in series with the normal filters, and making an additional color measurement or scan with the filter in place.

There is an ongoing need for a scanner providing light intensity measurements over more than three spectral bands for improved color accuracy.

### SUMMARY OF THE INVENTION

Three example embodiments are provided. Each embodiment incorporates a trichromatic dichroic beamsplitter and a polarization filter. The spectral bands reflected or transmitted by the dichroic coated optics are different for different polarization states. By inserting polarization coatings into the optical path, each spectral band from the dichroic coated optics is further divided into multiple spectra. In a first example embodiment, a polarization filter is placed in the optical path to provide two sequential measurements for each row of photosensor elements. Although a polarization filter may be mechanically moved into place, or rotated, a preferable embodiment is to use an electronic polarization filter, thereby eliminating mechanical movement of the polarization filter.

In a second example embodiment, the rows of photosensitive elements are logically divided into pairs. For each pair of rows, photosensitive elements in one row are filtered to receive p-polarized light and photosensitive elements in the other row are filtered to receive s-polarized light. In the second example embodiment, the polarization coatings may be applied directly to the photosensitive arrays, or onto other fixed elements in the optical path. In a specific second example embodiment, a dichroic beam splitter divides incoming light into three spectral bands, which are further divided into six spectral bands by polarization filters, which in turn are received by six rows of photosensor elements.

In a third example embodiment, a beamsplitter, absorption filtering, and polarization filtering are all combined. The spectral response of the dichroic layers in the beamsplitter is different than the spectral response of absorption filters applied directly to photosensor arrays. By using both kinds of filters, more color information is obtained, and better color accuracy may be obtained. Adding polarization further extends the number of different colors obtained.

### BRIEF DESCRIPTION OF THE DRAWINGS

Figure 1 is a block diagram side view of a scanner in accordance with a first example embodiment of the invention.
Figures 2A, 2B, and 2C are graphs illustrating the spectral response of a trichromatic dichroic beamsplitter with different responses for each linear polarization state.
Figure 3 is a block diagram side view of a scanner in accordance with a second example embodiment of the invention.
Figure 4 is a block diagram side view of a scanner in accordance with a third example embodiment of the invention.

### DETAILED DESCRIPTION OF THE PREFERRED EMBODIMENT OF THE INVENTION

In a simplified wave model of natural light, the light is treated as a transverse electromagnetic wave with a rapidly varying succession of different polarization states. For each polarization state, the electric field vector may be modeled as rotating around the direction of propagation and changing magnitude, tracing out an ellipse in a fixed space perpendicular to the direction of propagation. Special cases of the elliptical model result in tracing out a straight line (linear polarized or plane polarized) or tracing out an ellipse (circular polarized). There are two possible orthogonal linear polarization lines. In this patent document, the two orthogonal linear polarization states will be referred to as "s" and "p."

Ideal polarizing filters transmit one polarization state and block the orthogonal state. In the following discussion, filters will be described as transmitting one polarization state and reflecting or absorbing the orthogonal state, but in general, there are no ideal elements transmitting, reflecting, or absorbing a single state. Instead, in general, the optical elements have some degree of asymmetry in that one polarization state is transmitted more than the orthogonal state.

For a normal angle of incidence (angle of incidence = zero degrees), the optical response (transmissivity versus wavelength) of an interference filter is the same for each of the two linear polarization states. As the angle of incidence increases, the optical response of an interference filter changes with the angle of incidence, and the changes are different for each of the two linear polarization states. Stated alternatively, at any one particular non-zero angle of incidence, the shape and wavelengths of the filtering effect is different for each of the two linear polarization states. Typically, interference filters are designed with compensation to minimize the effects of polarization. The example embodiments of the present invention take advantage of the differences, and some optical response difference between the two linear polarization states is required.

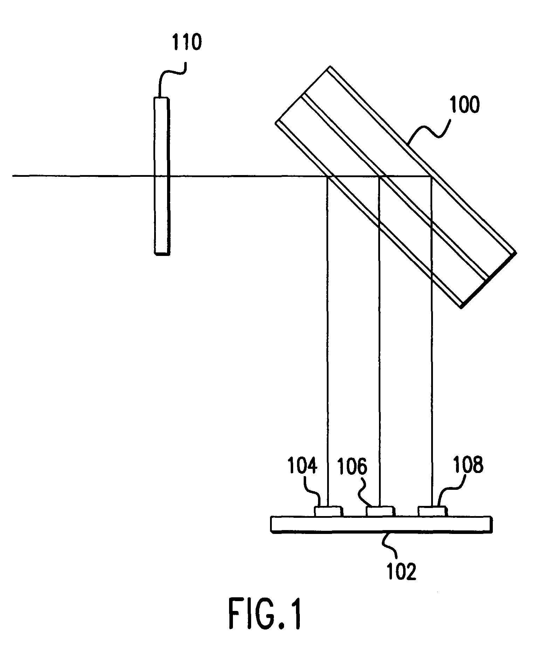

Figure 1 illustrates a first example embodiment of the invention. A color separator 100 receives white light and separates it spatially into three spectral bands, for example, red, green, and blue. A photosensor array 102 includes three rows of photosensitive elements (104, 106, and 108). Each row of photosensitive elements receives one color band from the color separator. An example of a suitable color separator (dichroic beamsplitter) may be found in U.S. Patent Number 4,709,144 (Vincent), which is incorporated herein for all that it discloses. In particular, a color separator in accordance with the Vincent patent includes three dichroic layers that selectively reflect certain bands of wavelengths. With an angle of incidence of approximately 45 degrees as illustrated, the spectral response of each dichroic layer varies with linear polarization.

In the example embodiment illustrated in figure 1, a polarization filter 110 is placed in the light path. Polarization filter 110 may be rotated to provide two linear polarization states, or two separate filters may be alternately translated into the optical path. At one position (angle of rotation or translation) for the filter 110, the color separator 100 receives s-polarized light. Changing the position of the filter (110) (translating to a separate filter area or rotating ninety degrees) then causes the color separator to receive p-polarized light. Each row of photosensor elements (104, 106, 108) makes two separate light intensity measurements for each line being scanned. Each row measures light intensity with the polarizer 110 in a position to transmit s-polarized light, and separately measures light intensity with the polarizer 110 in a position to transmit p-polarized light.

Alternatively, filter 110 may be an electronic polarization filter, which may remain stationary, and may be switched to one of two states electronically. An example is a liquid crystal variable retarder available from Meadowlark Optics, P.O. Box 1000, 5964 Iris Parkway, Frederick, Colorado, 80530. A specific example arrangement has a fixed linear polarizer in series with a liquid crystal variable retarder. If, for example, the linear polarizer transmits s-polarized light, the variable retarder can be electronically controlled to either rotate (phase retard 180 degrees) incoming light to p-polarized light, or to have no effect and transmit the s-polarized light. In addition to eliminating the requirement for mechanical motion control, an electronic polarizer can provide intermediate phase delay. For example, instead of rotating s-polarized light to p-polarized light, the filter can provide any phase between s-polarized and p-polarized. Therefore, a two-state response can be "tuned" (phase delay less than 180 degrees to provide a particular filtering effect) or more than two states can be used to expand the number of different colors. For example, with three retardation states, a scanner with a trichromatic dichroic beamsplitter could generate nine colors.

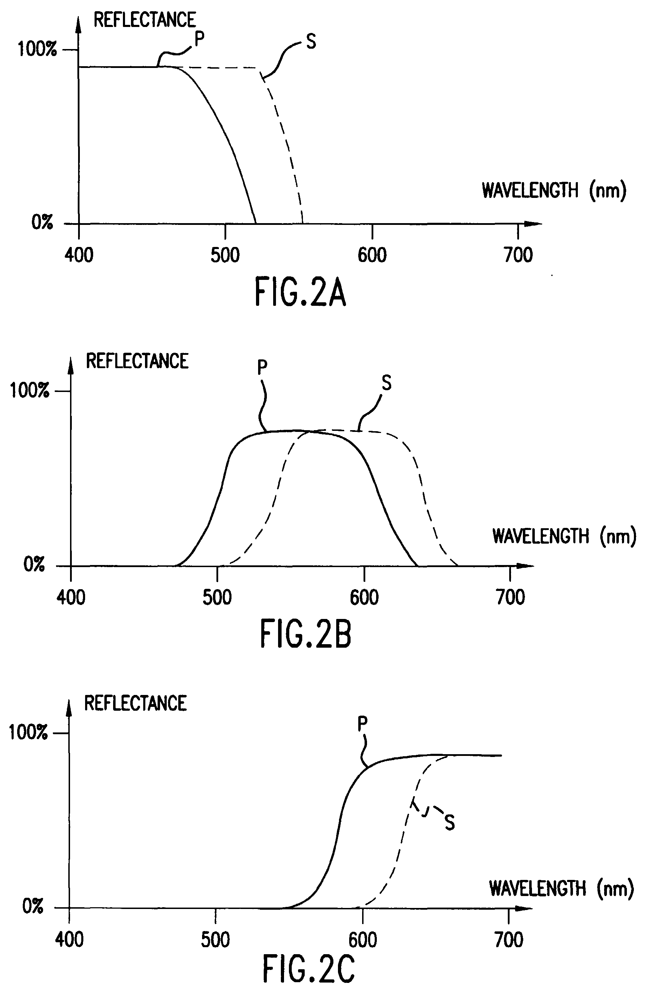

Figures 2A, 2B and 2C illustrate the response of a trichromatic dichroic beamsplitter with different responses for each of the two linear orthogonal polarization states. Figures 2A, 2B, and 2C are for illustration only, and the specific spectral characteristics do not accurately represent any particular actual device. In each figure, note that the output for s-polarized light is shifted toward longer wavelengths relative to the output for p-polarized light. Figure 2A represents the "blue" output of the beamsplitter, figure 2B represents the "green" output, and figure 2C represents the "red" output.

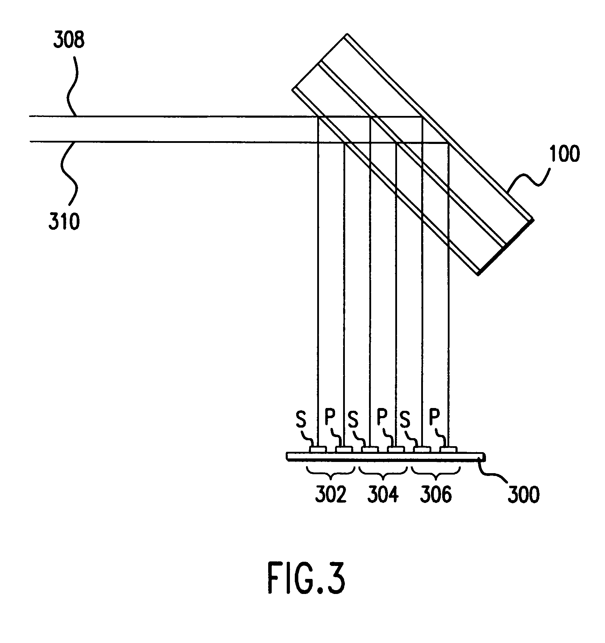

Figure 3 illustrates a second example embodiment of the invention. In figure 3, a trichromatic dichroic beamsplitter 100 functions as in figure 1. However, in figure 3, instead of one polarization filter that affects all light in the light path, the sensor array 300 has pairs of rows (302, 304, 306) of sensors, and each row is filtered to receive either p-polarized light or s-polarized light. Whereas the configuration of figure 1 requires two (or more) sequential light intensity measurements for each scanned line, the configuration of figure 3 measures light intensity for six "colors" simultaneously. However, in the embodiment of figure 3, in contrast to the embodiment of figure 1, the rows of photosensors image two different scan lines (308, 310) on the document being imaged. Therefore, some buffer memory is required to merge two separate images into one.

In figure 3, for simplicity of illustration, the polarization filters are depicted as being applied directly onto the photosensor array. Typically, however, for fabrication reasons, only dye based absorption filters are applied directly to photosensor elements. The only requirement is for a polarization filter to be somewhere in the optical path for each row of photosensors. Many alternatives are possible. Figures 1 and 3 have been simplified for illustration. In figures 1 and 3, the optical path length through the beamsplitter 100 is different for each of the colors. One solution to equalizing the optical path lengths is to simply tilt the sensor array, as illustrated in figures 5A and 6 of Vincent. Another solution is to insert an optical path length compensator, as taught in U.S. Patent Number 5,040,872, which is incorporated herein for all that it discloses. If a path length compensator is used in the configuration of figure 3, the polarization filters may be applied to the surfaces of the path length compensator. Alternatively, a separate optical plate may be attached as a cover to the sensor array, with the polarization filters applied on the separate plate (see, for example, U.S. Patent Number 5,300,767, which is incorporated herein for all that it discloses).

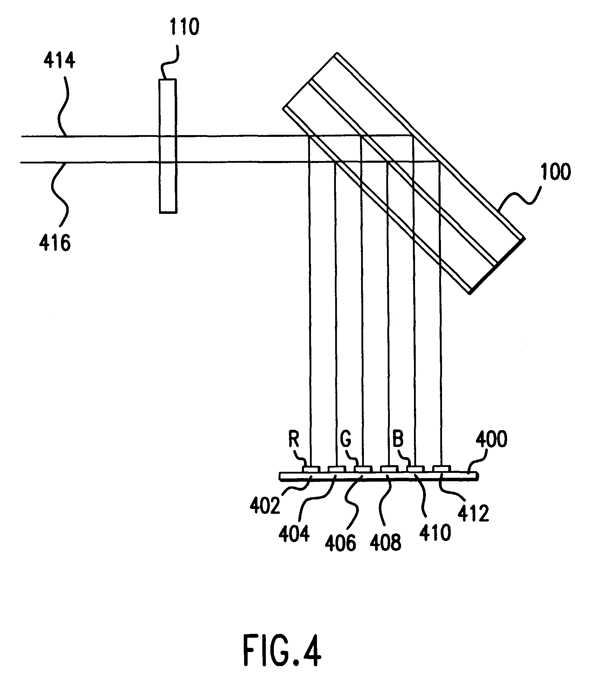

Figure 4 illustrates a third example embodiment of the invention. In figure 4, a trichromatic dichroic beamsplitter 100, and a polarization filter 110 functions as in figures 1 and 3. In figure 4, a photosensor array 400 has pairs of rows of sensors as in figure 3. However, in figure 4, each row of photosensors is either unfiltered (no absorption filter within the band of visible wavelengths), or is filtered by an absorption filter applied directly to the photosensor array. Rows 402 and 404 each receive light in the red wavelengths, as determined by the beamsplitter 100. Row 404 is unfiltered, and row 402 is further filtered by a red absorption filter that transmits a different band of red wavelengths than the band received from the beamsplitter. Similarly, rows 406 and 408 receive green wavelengths, row 408 is unfiltered, and row 406 is further filtered by a green absorption filter. Rows 410 and 412 receive blue wavelengths, row 412 is unfiltered, and row 410 is further filtered by a blue absorption filter. Of course, in order to provide additional information, the spectral response of each absorption filter must be different than the spectral response of the corresponding dichroic filter, but must also overlap. Using a polarization filter 110 with two orthogonal polarization states, the embodiment of figure 4 provides a system that measures 12 different colors.

In the embodiment of figure 4, as in figure 3, the rows of photosensors image two different scan lines on the document being imaged. That is, filtered rows 402, 406, and 410 image scan line 414, and unfiltered rows 404, 408 and 412 image scan line 416. Therefore, some buffer memory is required to merge two separate images into one.

Three rows of photosensors in figure 4 are described as "unfiltered." Note that it is common in image scanners to suppress infrared wavelengths. If infrared filters are not present elsewhere in the light path, then infrared filters may be necessary on rows 404, 408, and 412. Therefore, more precisely, rows 404, 408, and 412 do not have absorption filters that absorb wavelengths within the band of wavelengths received from the beamsplitter.

Three rows of photosensors in figure 4 are described as filtering red, green, and blue. Other color bands may be suitable, for example, yellow, magenta, and cyan.

Each of the example embodiments depicts a system that generates at least six color intensity values for each pixel on the document being scanned. In general, any number of distinct color bands greater than three may be sufficient to provide suitable color information for improved color accuracy.

In general, it is not necessary for a scanner in accordance with the invention to store or transmit more than three color intensity values for every pixel. Instead, a transformation matrix may be used to reduce N values to three values, where N is greater than three. An Nx3 matrix may be employed for color correction, transformation from one color coordinate system to another, transformation to a different illuminant, or any number of other color transformations well known in the art.

The foregoing description of the present invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A color separator comprising:
a first light filter (100), reflecting at least one band of wavelengths that is within a human visible band of wavelengths;
at least one polarization light filter (110), selectively transmitting some of the light within the band of wavelengths reflected by the first light filter; and
an array of photosensors (104, 106, 108), receiving light that has been reflected by the first light filter and has been transmitted through the polarization light filter.

2. A color separator as in claim 1, wherein the polarization light filter further comprises a first polarization area that transmits one linear polarization state and a second polarization area that transmits a second linear polarization state.

3. A color separator as in claim 2, wherein the polarization light filter is rotatable, and either the first polarization area or the second polarization area is rotated into a light path.

4. A color separator as in claim 1, wherein the selective transmission of the polarization light filter is electronically controllable.

5. A color separator as in claim 2, wherein a first row of photosensors (302-s, 304-s, 306-s) in the array of photosensors receives light being transmitted through the first polarization area, and a second row of photosensors (302-p, 304-p, 306-p) in the array of photosensors receives light being transmitted through the second polarization area.

6. A color separator as in claim 1, wherein a first row of photosensors (402, 406, 410) in the array of sensors receives light from the first light filter that is transmitted through a color absorption filter, and a second row of photosensors (404, 408, 412) in the array of photosensors receives light from the first light filter that has not been transmitted through the color absorption filter.
